# EUROPEAN PATENT APPLICATION

(11) **EP 4 576 789 A1**
(43) Date of publication of application: **25.06.2025**
(21) Application number: 23877591.0
(22) Date of filing: 05.10.2023
(51) Int. Cl.: H04N 21/41, H04N 9/31, H04N 21/436, H04N 21/485, H04N 21/43

(54) **DISPLAY DEVICE AND OPERATING METHOD THEREOF**

(30) Priority: 11.10.2022 KR 20220129759
(71) Applicant: Samsung Electronics Co., Ltd., Suwon-si, Gyeonggi-do 16677 (KR)
(72) Inventor: LEE, Sunggyu, Suwon-si, Gyeonggi-do 16677 (KR); KANG, Han, Suwon-si, Gyeonggi-do 16677 (KR); YU, Injae, Suwon-si, Gyeonggi-do 16677 (KR); CHO, Seungki, Suwon-si, Gyeonggi-do 16677 (KR)
(74) Representative: Appleyard Lees IP LLP
(86) International application number: PCT/KR2023/015326
(87) International publication number: WO 2024/080663

(57) **Abstract**

A display device may be provided, the display device including at least one sensor, a memory storing at least one instruction, and a processor configured to execute the at least one instruction stored in the memory to identify a surrounding situation based on information corresponding to the surrounding situation obtained through the at least one sensor in a minimum power state, identify, according to the identified surrounding situation, a component to which power is to be applied and an operation to be performed by the component, and control power to be applied to the identified component to perform the identified operation.

## Description

### Technical Field

Various embodiments relate to a display device and a method of operating the same. More specifically, the embodiments relate to a display device capable of extending a display in accordance with a display ratio of content and a display ratio of the display device by using an external device, and a method of operating the display device.

### Background Art

All content has a display ratio set to allow viewers to view the content at its optimal image quality and size.

Because such display ratios may vary depending on the content, there may be instances where a display device displays content that has a different display ratio from that of the display device.

In this case, when the content is displayed according to the display ratio of the display device, the entire content may not be displayed, resulting in a portion of the content being cropped.

To display the entire content, the display device may reduce the size of the content and use letter-boxing to display the content in only a partial area of a display, rather than in the entire area.

In addition, to display the entire content, the display device may display the content by connecting a plurality of display devices to change the size of the display, as in a dual-monitor configuration.

Research is needed on technologies that allow the entire content to be displayed at a ratio suitable for a display device, even when the display ratio of the content differs from that of the display device.

### Disclosure of Invention

### Solution to Problem

According to an embodiment, a display device may include a display, a memory storing one or more instructions, and at least one processor. The at least one processor may execute the one or more instructions stored in the memory to recognize a display ratio of content. The at least one processor may execute the one or more instructions stored in the memory to generate, based on the recognized display ratio of the content and a display ratio of the display, a first area of an image of the content to be displayed on the display, and a second area of the image of the content to be displayed, by an external device, on a surrounding area of the display. The at least one processor may execute the one or more instructions stored in the memory to display the first area on the display while controlling the external device to display the second area on the surrounding area of the display to extend the display, by transmitting the second area to the external device.

According to an embodiment, a method of operating a display device may include recognizing a display ratio of content. According to an embodiment, the method of operating a display device may include generating, based on the recognized display ratio of the content and a display ratio of a display included in the display device, a first area of an image of the content to be displayed on the display, and a second area of the image of the content to be displayed, by an external device, on a surrounding area of the display. According to an embodiment, the method of operating a display device may include transmitting the second area to the external device such that the display device displays the first area on the display and simultaneously, the external device displays the second area on the surrounding area of the display to extend the display.

According to an embodiment, a computer-readable recording medium may have recorded thereon a program for implementing a method of operating a display device, the method including recognizing a display ratio of content. According to an embodiment, a computer-readable recording medium may have recorded thereon a program for implementing the method of operating a display device, the method including generating, based on the recognized display ratio of the content and a display ratio of a display included in the display device, a first area of an image of the content to be displayed on the display, and a second area of the image of the content to be displayed, by an external device, on a surrounding area of the display. According to an embodiment, a computer-readable recording medium may have recorded thereon a program for implementing the method of operating a display device, the method including transmitting the second area to the external device such that the display device displays the first area on the display and simultaneously, the external device displays the second area on the surrounding area of the display to extend the display.

### Brief Description of Drawings

FIG. 1A is a diagram illustrating an example of a display device operating, according to the related art.
FIG. 1B is a diagram illustrating an example of a display device operating, according to the related art.
FIG. 2 is a diagram illustrating an example of a display device operating, according to an embodiment of the present disclosure.
FIG. 3 is a block diagram illustrating a configuration of a display device according to an embodiment of the present disclosure.
FIG. 4 is a block diagram illustrating a detailed configuration of a display device according to an embodiment of the present disclosure.
FIG. 5 is a flowchart of a method of operating a display device, according to an embodiment of the present disclosure.
FIG. 6 is a flowchart of a method of operating a display device and an external device, according to an embodiment of the present disclosure.
FIG. 7 is a diagram illustrating an example of a display device displaying a certain image to allow an external device to detect the position and size of a display, according to an embodiment of the present disclosure.
FIG. 8 is a diagram illustrating an example of content having a display ratio different from that of a display device, according to an embodiment of the present disclosure.
FIG. 9 is a diagram illustrating an example of a display device displaying a first area of content according to the display ratio of the display device, according to an embodiment of the present disclosure.
FIG. 10 is a diagram illustrating an example of a second area generated by a display device, according to an embodiment of the present disclosure.
FIG. 11 is a diagram illustrating an example of a display device extending a display by using an external device, according to an embodiment of the present disclosure.
FIG. 12 is a flowchart of a method of operating a display device and an external device, according to an embodiment of the present disclosure.
FIG. 13A is a block diagram illustrating a configuration of a display device according to the related art.
FIG. 13B is a block diagram illustrating a configuration of a display device and an external device, according to an embodiment of the present disclosure.
FIG. 14 is a diagram illustrating an example of a display device extending a display by using an external device, according to an embodiment of the present disclosure.
FIG. 15A is a diagram illustrating an example of a display device extending a display leftward and rightward according to the display ratio of content by using an external device, and further extending the display upward and downward according to a user input, according to an embodiment of the present disclosure.
FIG. 15B is a diagram illustrating an example of a display device extending a display upward and downward according to the display ratio of content by using an external device, and further extending the display leftward and rightward according to a user input, according to an embodiment of the present disclosure.
FIG. 16 is a diagram illustrating an example of a display device displaying ambient light on a certain surrounding area of a display by using an external device, according to an embodiment of the present disclosure.

### Mode for the Invention

Hereinafter, embodiments of the present disclosure will be described in detail with reference to the accompanying drawings to enable those of skill in the art to perform the present disclosure without any difficulty. The present disclosure may, however, be embodied in many different forms and should not be construed as being limited to embodiments set forth herein.

Although the terms used herein are generic terms, which are currently widely used and are selected by taking into consideration functions thereof, the meanings of the terms may vary according to intentions of those of ordinary skill in the art, legal precedents, or the advent of new technology. Thus, the terms should be defined not by simple appellations thereof but based on the meanings thereof and the context of descriptions throughout the present disclosure.

In addition, terms used herein are for describing a particular embodiment, and are not intended to limit the scope of the present disclosure.

Throughout the specification, when a part is referred to as being "connected to" another part, it may be "directly connected to" the other part or be "electrically connected to" the other part through an intervening element.

The term "the" and other demonstratives similar thereto in the specification (especially in the following claims) should be understood to include a singular form and plural forms. In addition, when there is no description explicitly specifying an order of operations of a method according to the present disclosure, the operations may be performed in an appropriate order. The present disclosure is not limited to the described order of the operations.

As used herein, phrases such as "in some embodiments" or "in an embodiment" does not necessarily indicate the same embodiment.

Some embodiments of the present disclosure may be represented by block components and various process operations. Some or all of the functional blocks may be implemented by any number of hardware and/or software elements that perform particular functions. For example, the functional blocks of the present disclosure may be embodied by at least one microprocessor or by circuit components for a certain function. In addition, for example, the functional blocks of the present disclosure may be implemented by using various programming or scripting languages. The functional blocks may be implemented by using various algorithms executable by one or more processors. In addition, the present disclosure may employ known technologies for electronic settings, signal processing, and/or data processing. Terms such as "mechanism", "element", "unit", or "component" may be used in a broad sense and are not limited to mechanical or physical components.

In addition, connection lines or connection members between components illustrated in the drawings are merely exemplary of functional connections and/or physical or circuit connections. Various alternative or additional functional connections, physical connections, or circuit connections between components may be present in a practical device.

In addition, as used herein, the terms such as "...er (or)", "... unit", "... module", etc., denote a unit that performs at least one function or operation, which may be implemented as hardware or software or a combination thereof.

In addition, the term "user" as used herein refers to a person who uses a display device to control functions or operations of the display device, and may include a viewer, an administrator, or an installation engineer.

In addition, the term "display ratio" as used herein may refer to a display aspect ratio, i.e., an aspect ratio of width to height. For example, content may have a unique display ratio depending on the method by which the content was filmed, and may be displayed according to the unique display ratio. In addition, a display device may include displays of various sizes and may reproduce an image according to the ratio of width to height of the included display, i.e., the display ratio.

In addition, as used herein, the term "display device" may refer to a display included in a display device. For example, "displaying content on a display device" may mean displaying the content on a display included in the display device, and "the display ratio of a display device" may mean the display ratio of a display included in the display device.

Hereinafter, the present disclosure will be described in detail with reference to the accompanying drawings.

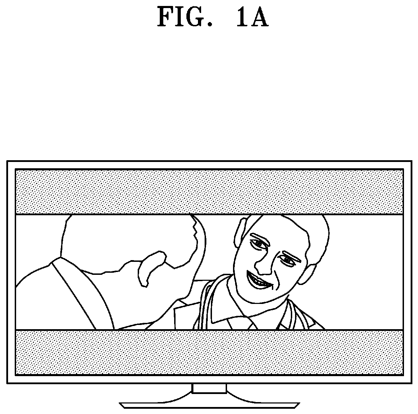

FIG. 1A is a diagram illustrating an example of a display device operating, according to the related art.

The display ratio of content being displayed in FIG. 1A may be different from the display ratio of a display included in the display device of FIG. 1A.

For example, the content of FIG. 1A may be content filmed to be viewed at a display ratio of 32:9, and the display device of FIG. 1A may be a display device having a display ratio of 16:9.

Content filmed to be viewed at a display ratio of 32:9 may refer to content shot to have a ratio where the horizontal length is 32 and the vertical length is 9.

A display device having a display ratio of 16:9 may mean that the ratio of width to height of a display included in the display device is 16:9.

When reproducing content such that the height of the content is equal to the height of the display device in FIG. 1A, 50 % of the left and right sides of the content may not be displayed on the display.

Thus, to display the entire content on the display, the display device may adjust the horizontal size of the display device to be the same as the horizontal size of the content, and adjust the vertical size of the display device to half.

As a result, the display device may not be able to display the content in 50 % of the vertical area of the display device, as illustrated in FIG. 1A.

In this case, the display device may not be able to use a partial area of the display for displaying the content.

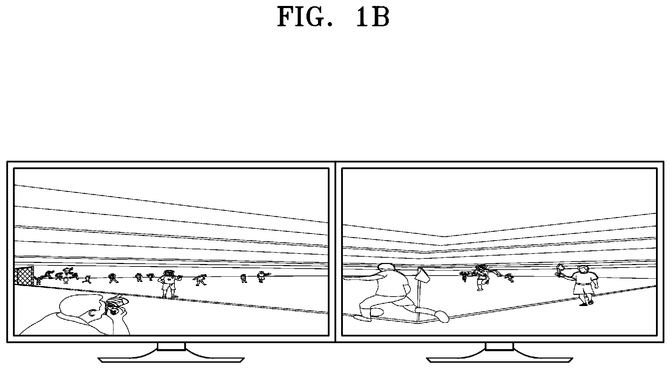

FIG. 1B is a diagram illustrating an example of a display device operating, according to the related art.

To avoid a situation where a partial area of a display cannot be used for displaying content as illustrated in FIG. 1A, a display device having a plurality of displays may be used.

In the embodiment of FIG. 1B, the display device may display content by changing the display ratio of the display device in such a manner in which one device uses two displays connected to the device.

For example, with a multi-display configuration in which two displays, which are each manufactured to display with a display ratio of 16:9, are arranged side by side in the horizontal direction, the display ratio of the display device may be the sum of the ratios of width to height of the two displays, i.e., 32:9.

For example, in a case in which the content in FIG. 1B has been filmed to be viewed at a ratio of 32:9, the display device may display the entire content by using the entire display area.

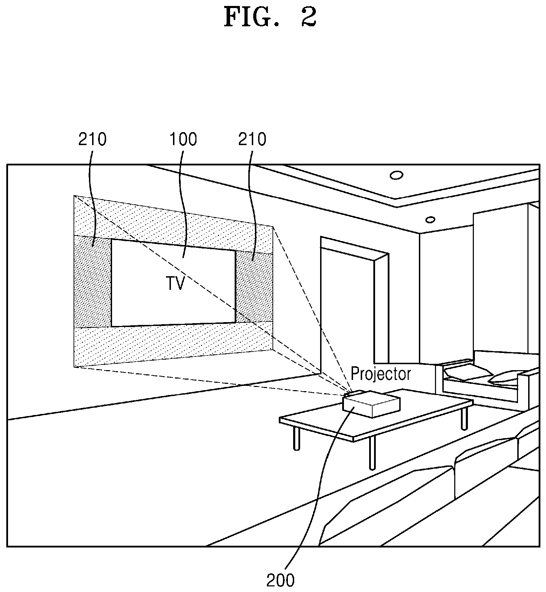

FIG. 2 is a diagram illustrating an example of a display device operating, according to an embodiment of the present disclosure.

As illustrated in FIG. 2, a display device 100 of the present disclosure may be a smart television (TV), but this is merely an embodiment, and the display device 100 may be implemented as various display devices.

For example, the display device 100 may be implemented in various forms, such as a tablet personal computer (PC), a digital camera, a camcorder, a laptop computer, a netbook computer, a desktop computer, an electronic book terminal, a video phone, a digital broadcasting terminal, a personal digital assistant (PDA), a portable multimedia player (PMP), a navigation device, a wearable device, a smart refrigerator, or other home appliances.

In particular, the embodiments may be readily implemented in a display device including a large-sized video output unit such as a TV, but are not limited thereto. In addition, the display device 100 may be stationary or mobile, and may be a digital broadcast receiver capable of receiving a digital broadcast signal.

The display device 100 may be implemented as a flat display device, a curved display device with a screen having a curvature, or a flexible display device having an adjustable curvature. The output resolution of the display device 100 may include, for example, high definition (HD), full HD, ultra HD, or a higher resolution than ultra HD.

The display device 100 of the present disclosure may have a display ratio determined according to the ratio of the horizontal length to vertical length of a display.

The display device 100 may communicate with an external device 200 in various manners by using a wired or wireless network, a communication medium, or the like.

In an embodiment, the display device 100 may be connected to the external device 200 by using various short-range communication methods such as infrared, Wi-Fi, Bluetooth, or Bluetooth Low Energy (BLE) communication.

In an embodiment, the display device 100 may be connected to the external device 200 by using a wireless protocol such as Wi-Fi Direct.

In the specification, the external device 200 may refer to a device capable of communication, which is external to the display device 100.

The external device 200 may be implemented in various forms such as a smart projector, a projector, a smart phone, a tablet PC, a digital camera, a camcorder, a laptop computer, a netbook computer, a PDA, or a wearable device. In particular, the embodiments may be easily implemented in a device that is convenient to carry and has a function of enlarging an image and projecting the enlarged image forward, such as a portable smart projector, but are not limited thereto. The external device 200 may be implemented in any electronic device that is capable of network connection and has a function of enlarging an image and projecting the enlarged image forward, in addition to the above-described examples.

In an embodiment, the display device 100 may extend an image being reproduced on the display of the display device 100, and display the extended image on a surrounding area of the display by using the external device 200.

In the embodiment of FIG. 2, the external device 200 is illustrated as being positioned at the front of the display device 100, but the present disclosure is not limited thereto, and the external device 200 may be present at various locations, such as at a diagonal to the display device 100, below the display device 100, or above the display device 100.

The size or shape of an area 210 extended by the external device 200 may vary depending on the display ratio of the content and the display ratio of the display device.

In the embodiments of FIGS. 1A and 1B, to display content filmed to be viewed at a ratio of 32:9, the display device needs to display the content by using only a portion of the display area as illustrated in FIG. 1A, or display the content by using a multi-display configuration as illustrated in FIG. 1B.

However, the display device 100 according to the embodiment of FIG. 2 may display part of content filmed to be viewed at a display ratio of 32:9, at a display ratio unique to the display device 100, while displaying the other part of the content that cannot be displayed on the display device 100 by radiating an image as a beam toward the surrounding area 210 of the display by using the external device 200.

When the display device 100 having a display ratio of 16:9 displays content filmed to be viewed at a display ratio of 32:9, the display device 100 may display the content with 50 % of the left and right sides of the content lost.

In an embodiment, the display device 100 may allow the external device 200 to display the lost 50 % of the content on the surrounding area 210 of the display. In this case, the lost 50 % of the content may be displayed on left and right areas extended from the display device 100, each for 25 %.

This will be described in detail below.

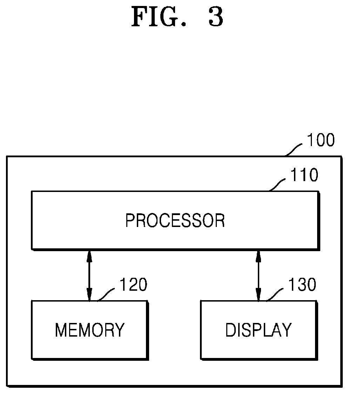

FIG. 3 is a block diagram illustrating a configuration of a display device according to an embodiment of the present disclosure.

Referring to FIG. 3, the display device 100 may include a processor 110, a memory 120, and a display 130.

The memory 120 may store programs for the processor 110 to perform processing and control. In addition, the memory 120 may store data input to or output from the display device 100.

The memory 120 may include at least one of an internal memory (not shown) and an external memory (not shown). The memory 120 may store control history information, current environment information, and state information.

The memory 120 may include at least one of a flash memory-type storage medium, a hard disk-type storage medium, a multimedia card micro-type storage medium, a card-type memory (e.g., Secure Digital (SD) or eXtreme Digital (XD) memory), random-access memory (RAM), static RAM (SRAM), read-only memory (ROM), electrically erasable programmable ROM (EEPROM), programmable ROM (PROM), magnetic memory, a magnetic disk, and an optical disc.

The internal memory may include, for example, at least one of a volatile memory (e.g., dynamic random-access memory (DRAM), static RAM (SRAM), synchronous DRAM (SDRAM), etc.), a non-volatile memory (e.g., one-time programmable read-only memory (OTPROM), programmable ROM (PROM), erasable programmable ROM (EPROM), electrically erasable programmable ROM (EEPROM), mask ROM, flash ROM, etc.), a hard disk drive (HDD), or solid-state drive (SSD).

According to an embodiment, the processor 110 may load a command or data received from at least one of a non-volatile memory or other components into a volatile memory, and process the command or data. In addition, the processor 110 may store, in the non-volatile memory, data received from other components or generated by the processor 110.

The external memory may include, for example, at least one of CompactFlash (CF), SD, Micro-SD, Mini-SD, xD, or Memory Stick.

The memory 120 may store one or more instructions executable by the processor 110.

In an embodiment, the memory 120 may store various types of information input through an input/output unit (not shown).

In an embodiment, the memory 120 may store instructions for controlling the processor 110 to recognize a display ratio of content, generate, based on the recognized display ratio of the content and a display ratio of the display 130, a first area of an image of the content to be displayed on the display 130 and a second area of the image of the content to be displayed, by the external device 200, on a surrounding area of the display 130, and display the first area on the display 130 while causing the external device 200 to display the second area on the surrounding area of the display 130 for display extension by transmitting the second area to the external device 200.

In an embodiment, one or more processors 110 may be provided.

In an embodiment, when a user input is received or a preset and stored condition is satisfied, the processor 110 may execute an operating system (OS) and various applications stored in the memory 120.

In an embodiment, the processor 110 may include RAM to store signals or data input from outside the display device 100 or to be used as a storage for various operations performed by the display device 100, and ROM storing a plurality of instructions and/or a control program for controlling the display device 100.

In an embodiment, the processor 110 may include a single core, dual cores, triple cores, quad cores, or cores corresponding to a multiple thereof. In addition, the processor 110 may include a plurality of processors. For example, the processor 110 may be implemented as a main processor (not shown) and a sub-processor (not shown) operating in a sleep mode.

In addition, the processor 110 may include at least one a central processing unit (CPU), a graphics processing unit (GPU), and a video processing unit (VPU). Alternatively, according to an embodiment, the processor 110 may be implemented as a system on a chip (SoC) into which at least one of a CPU, a GPU, and a VPU is integrated.

The processor 110 may execute one or more instructions stored in the memory 120 to control various components of the display device 100.

In an embodiment, the processor 110 may recognize a display ratio of content.

In an embodiment, the processor 110 may display the first area on the display 130 while causing the external device 200 to extend and display the second area on the surrounding area of the display 130 by transmitting the second area to the external device 200.

In an embodiment, the processor 110 may transmit a display extension request to the external device 200, and receive, from the external device 200, a response to the display extension request.

In an embodiment, the processor 110 may cause the external device 200 to detect the position of the display 130 and the size of the display 130 by transmitting the display extension request to the external device 200.

In an embodiment, the processor 110 may display a certain image on the display 130 to allow the external device 200 to detect the position of the display 130 and the size of the display 130.

In an embodiment, in response to receiving an input for setting a display extension mode from a user, the processor 110 may transmit the display extension request to the external device 200.

In an embodiment, based on the recognized display ratio of the content and the display ratio of the display 130 being different from each other, the processor 110 may determine the first area to be displayed on the display 130 according to the display ratio of the display 130, and determine the other area that is not included in the first area, as the second area to be displayed, by the external device 200, on the surrounding area of the display 130. This will be described in detail below.

In an embodiment, the processor 110 may transmit a display request for the second area to the external device 200, and adjust a display for the first area according to a state of the external device 200 displaying the second area. This will be described in detail below.

In an embodiment, the processor 110 may synchronize and display an image of the content displayed in the first area, with an image of the content displayed in the second area. This will be described in detail below.

In an embodiment, the processor 110 may recognize the display ratio of the content by using at least one of pieces of metadata including the resolution or display ratio of the content.

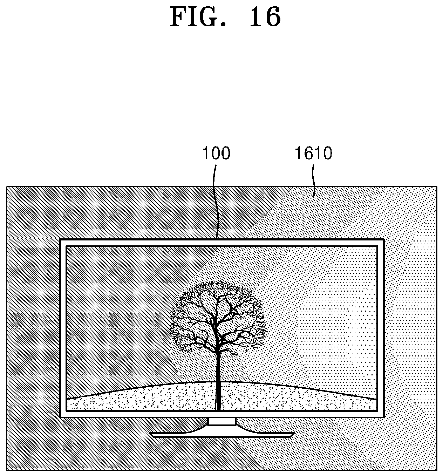

In an embodiment, based on the recognized display ratio of the content and the display ratio of the display 130 being equal to each other, the processor 110 may cause the external device 200 to display ambient light on a certain surrounding area of the display 130. This will be described in detail below with reference to FIG. 16.

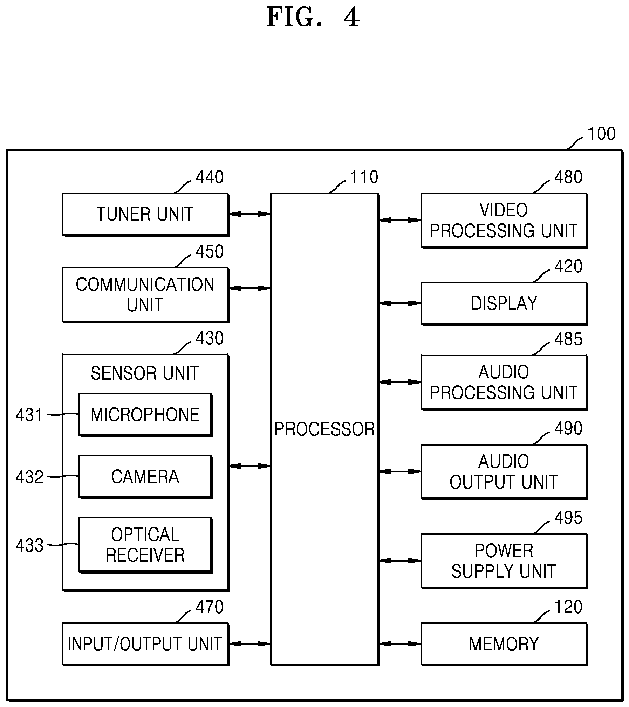

FIG. 4 is a block diagram illustrating a detailed configuration of a display device according to an embodiment of the present disclosure.

The display device 100 of FIG. 4 may be an embodiment of the display device 100 described above with reference to FIGS. 2 and 3.

Referring to FIG. 4, the display device 100 may include a tuner unit 440, the processor 110, a display 420, a communication unit 450, a sensor unit 430, an input/output unit 470, a video processing unit 480, an audio processing unit 485, an audio output unit 490, the memory 120, and a power supply unit 495.

The processor 110 of FIG. 4 corresponds to the processor 110 of FIG. 3, the display 420 of FIG. 4 corresponds to the display 130 of FIG. 3, and the memory 120 of FIG. 4 corresponds to the memory 120 of FIG. 3. Thus, the descriptions thereof provided above will be omitted.

The communication unit 450 according to an embodiment may include a Wi-Fi module, a Bluetooth module, an infrared communication module, a wireless communication module, a local area network (LAN) module, an Ethernet module, a wired communication module, and the like. Here, each communication module may be implemented as at least one hardware chip.

The Wi-Fi module and the Bluetooth module perform communication by using a Wi-Fi scheme and a Bluetooth scheme, respectively. When the Wi-Fi module or the Bluetooth module is used, various pieces of connection information, such as a service set identifier (SSID) or a session key, may be first transmitted and received, and various pieces of information may be then transmitted and received after a communication connection is established by using the connection information. The wireless communication module may include at least one communication chip configured to perform communication according to various wireless communication standards, such as Zigbee, 3^{rd} Generation (3G), 3^{rd} Generation Partnership Project (3GPP), Long-Term Evolution (LTE), LTE Advanced (LTE-A), 4^{th} Generation (4G), 5^{th} Generation (5G), or the like.

According to an embodiment, the communication unit 450 may receive a message from the external device 200.

The tuner unit 440 according to an embodiment of the disclosure may be tuned to and select only a frequency of a channel desired to be received by the display device 100 from among a number of radio wave components by performing, for example, amplification, mixing, and resonance on a broadcast signal received in a wired or wireless manner. The broadcast signal includes an audio, a video, and additional information (e.g., an EPG).

The tuner unit 440 may receive a broadcast signal from various sources, such as terrestrial, cable, satellite, and Internet broadcasters. The tuner unit 440 may also receive a broadcast signal from a source such as an analog or digital broadcaster.

The sensor unit 430 may detect a voice around the display device 100, an image around the display device 100, or an interaction with the surroundings of the display device 100, and may include at least one of a microphone 431, a camera 432, and an optical receiver 433. The sensor unit 430 may detect a state of the display device 100 or a state of a surrounding of the display device 100, and transmit the detected information to the processor 110.

The microphone 431 receives a voice uttered by the user, and a voice around the display device 100. The microphone 431 may convert the received voice into an electrical signal and output the electrical signal to the processor 110. The microphone 431 may perform various denoising algorithms for removing noise occurring when an external audio signal is received.

The camera 432 may obtain a still image or an image frame of a moving image or the like. An image captured through an image sensor may be processed by a processor 110 or a separate image processing unit (not shown).

An image frame processed by the camera 432 may be stored in the memory 120 or transmitted to the outside through the communication unit 450. Two or more cameras 432 may be provided depending on the configuration of the display device 100.

The optical receiver 433 receives an optical signal (including a control signal) from an external remote control device (not shown). The optical receiver 433 may receive, from a control device (not shown), an optical signal corresponding to a user input (e.g., a touch, a push, a touch gesture, a voice, or a motion). A control signal may be extracted from the received optical signal, under control of the processor 110. For example, the optical receiver 433 may receive a control signal corresponding to a channel up/down button for channel switching, from a remote control device (not shown).

The sensor unit 430 of FIG. 4 is illustrated as including the microphone 431, the camera 432, and the optical receiver 433, but is not limited thereto, and may include at least one of a magnetic sensor, an acceleration sensor, a temperature/humidity sensor, an infrared sensor, a gyroscope sensor, a position sensor (e.g., a global positioning system (GPS)), a barometric sensor, a proximity sensor, a red-green-blue (RGB) sensor, an illuminance sensor, and a Wi-Fi signal receiving unit, but is not limited thereto. Functions of the sensors may be intuitively inferred by those of skill in the art from their names, and thus, detailed descriptions thereof will be omitted.

The sensor unit 430 of FIG. 4 is illustrated as being provided in the display device 100 itself, but is not limited thereto, and may be provided in a control device, which is a device that is positioned independently of the display device 100 and communicates with the display device 100, such as a remote controller.

In a case in which the sensor unit 430 is provided in the control device of the display device 100, the control device may digitize information detected by the sensor unit 430 and transmit the digitized information to the display device 100. The control device may communicate with the display device 100 by using short-range communication such as infrared, Wi-Fi, or Bluetooth.

For example, the microphone may be provided in the display device 100 itself, but may also be provided in a control device, which is positioned independently of the display device 100 and communicates with the display device 100, such as a remote controller.

In an embodiment, in a case in which a microphone is provided in a remote controller, an analog audio signal may be received through the microphone, digitized by the remote controller, and then transmitted to a TV. Here, the remote controller may communicate with the display device 100 by using short-range communication such as infrared, Wi-Fi, or Bluetooth.

In an embodiment, the display device 100 may include a plurality of communication units 450 capable of various types of short-range communication such as infrared, Wi-Fi, or Bluetooth.

In an embodiment, the display device 100 may include a plurality of communication units 450, in which a communication unit for communicating with a server, and a communication unit for communicating with a remote controller are different from each other.

In an embodiment, the display device 100 may include the communication unit 450 in which the same communication unit is used for communicating with a server and communicating with a remote controller.

In an embodiment, a device having a remote controller application installed therein, such as a smart phone, may perform the same function as the remote controller described above. That is, a device having a remote controller application installed therein may control the display device 100 such as a TV, and perform a speech recognition function.

Devices on which a remote controller application may be installed may include any device that may operate with an application installed therein, such as an artificial intelligence (AI) speaker, in addition to smart phones.

The input/output unit 470 receives a video (e.g., a moving image), an audio (e.g., a voice or music), and additional information (e.g., an EPG) from the outside of the display device 100, under control of the processor 110. The input/output unit 470 may include any one of a high-definition multimedia interface (HDMI) port, a mobile high-definition link (MHL) port, a universal serial bus (USB) port, a display port (DP), a Thunderbolt port, a video graphics array (VGA) port, an RGB port, a D-subminiature (D-SUB) port, a digital visual interface (DVI) port, a component jack, and a PC port.

The video processing unit 480 processes video data received by the display device 100. The video processing unit 480 may perform various image processing operations, such as decoding, scaling, noise filtering, frame rate conversion, or resolution conversion, on the video data.

The display 420 converts an image signal, a data signal, an on-screen display (OSD) signal, a control signal, or the like, which has been processed by the processor 110, to generate a driving signal. The display 420 may be implemented as a plasma display panel (PDP), a liquid-crystal display (LCD), an organic light-emitting diode (OLED), a flexible display, or a three-dimensional (3D) display. In addition, the display 420 may be configured as a touch screen to be used as both an output device and an input device.

The display 420 may output various pieces of content input through a communication unit (not shown) or the input/output unit 470, or output an image stored in the memory 120. In addition, the display 420 may output information input by the user through the input/output unit 470, on a screen.

The display 420 may include a display panel. The display panel may be an LCD panel or a panel including various light-emitting elements such as an LED, an OLED, or a cold cathode fluorescent lamp (CCFL). The display device 100 may be implemented as a flat display device, a curved display device with a screen having a curvature, or a flexible display device having an adjustable curvature. The display panel may be a three-dimensional (3D) display or an electrophoretic display.

The output resolution of the display panel may include, for example, high definition (HD), full HD, ultra HD, or a higher resolution than ultra HD.

In the embodiment of FIG. 4, the display device 100 is illustrated as including the display, but is not limited thereto. The display device 100 may be configured to be connected to a separate display device including a display via wired or wireless communication, to transmit video/audio signals to the display device.

The audio processing unit 485 processes audio data. The audio processing unit 485 may perform various processing operations, such as decoding, amplification, or noise filtering, on the audio data. In addition, the audio processing unit 485 may include a plurality of audio processing modules configured to process an audio corresponding to a plurality of pieces of content.

The audio output unit 490 outputs an audio included in a broadcast signal received through the tuner unit 440 under control of the processor 110. The audio output unit 490 may output an audio (e.g., a voice or a sound) input through the communication unit 450 or the input/output unit 470. In addition, the audio output unit 490 may output an audio stored in the memory 120 under control of the processor 110. The audio output unit 490 may include at least one of a speaker, a headphone output port, or a Sony/Philips Digital Interface (S/PDIF) output port.

The power supply unit 495 supplies power input from an external power source, to the components inside the display device 100 under control of the processor 110. In addition, the power supply unit 495 may supply power output from one or more batteries (not shown) in the display device 100, to the internal components, under control of the processor 110.

The memory 120 may store various pieces of data, programs, or applications for driving and controlling the display device 100 under control of the processor 110. The memory 120 may include a broadcast receiving module, a channel control module, a volume control module, a communication control module, a speech recognition module, a motion recognition module, an optical receiving module, a display control module, an audio control module, an external input control module, a power control module, a power control module of an external device connected in a wireless manner (e.g., Bluetooth), a speech database (DB), or a motion DB, which is not illustrated. The modules and the DBs of the memory 120, which are not illustrated, may be implemented in the form of software for the display device 1200 to perform a function of controlling broadcast reception, a channel control function, a volume control function, a communication control function, a speech recognition function, a motion recognition function, a light reception control function, a display control function, an audio control function, an external input control function, a power control function, or a power control function of an external device connected in a wireless manner (e.g., Bluetooth). The processor 110 may perform each function by using the software stored in the memory 120.

Meanwhile, the block diagrams of the display device 100 illustrated in FIGS. 3 and 4 are merely examples. Each of the components illustrated in the block diagrams may be integrated, added, or omitted according to the specification of the display device 100 actually implemented. That is, two or more components may be integrated into one component, or one component may be divided into two or more components, as necessary. In addition, a function performed by each block is for describing embodiments, and its detailed operation or device does not limit the scope of the present disclosure.

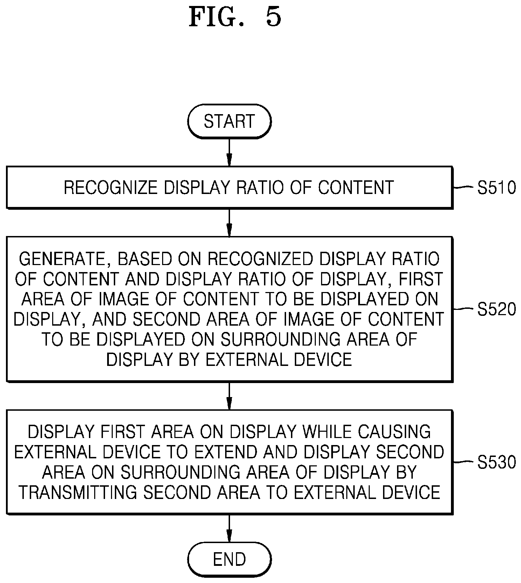

FIG. 5 is a flowchart of a method of operating a display device, according to an embodiment of the present disclosure.

Referring to FIG. 5, the display device 100 may recognize a display ratio of content (S510).

In an embodiment, the display device 100 may recognize the display ratio of the content by using at least one of pieces of metadata including the resolution or display ratio of the content.

In an embodiment, the display device 100 may recognize the display ratio of the content according to the resolution of the content. For example, the display device 100 may recognize the display ratio of content having a resolution of 1920 * 1080, as 16:9, which is proportional to the resolution.

In an embodiment, the display device 100 may recognize information about the display ratio included in the header of a content file.

In an embodiment, the display device 100 may recognize the display ratio of the content by using other metadata.

In an embodiment, the display device 100 may perform, before operation S510 of recognizing the display ratio of the content, an operation of transmitting a display extension request to the external device 200, and an operation of receiving, from the external device 200, a response to the display extension request.

In an embodiment, the display device 100 may perform, before operation S510 of recognizing the display ratio of the content, an operation of transmitting a display extension request to the external device 200, and an operation of causing the external device 200 to detect a position of the display 130 and a size of the display 130.

In an embodiment, the display device 100 may include an operation of determining whether the recognized display ratio of the content and the display ratio of the display 130 are equal to each other.

In an embodiment, based on the recognized display ratio of the content and the display ratio of the display 130 being equal to each other, the display device 100 may display the content on the display 130 without performing an operation for display extension. That is, based on the recognized display ratio of the content and the display ratio of the display 130 being equal to each other, the display device 100 may not perform operations S520 and S530. In this case, the external device 200 may not operate.

The display device 100 may generate, based on the recognized display ratio of the content and the display ratio of the display 130, a first area of an image of the content to be displayed on the display 130, and a second area of the image of the content to be displayed, by the external device 200, on a surrounding area of the display 130 (S520).

In an embodiment, based on the recognized display ratio of the content and the display ratio of the display 130 being different from each other, the display device 100 may determine the first area to be displayed on the display 130 according to the display ratio of the display 130.

In an embodiment, the display device 100 may determine the other area that is not included in the first area, as the second area to be displayed, by the external device 200, on the surrounding area 210 of the display 130.

As such, the display device 100 may divide the content into the first area to be reproduced on the display 130 and the second area to be reproduced, by the external device 200, on the surrounding area 210 of the display 130.

The display device 100 may display the first area on the display 130 while causing the external device 200 to display the second area on the surrounding area of the display 130 for display extension by transmitting the second area to the external device 200 (S530).

In an embodiment, the display device 100 may include an operation of transmitting the second area generated in operation S520 to the external device 200.

In an embodiment, the display device 100 may display the first area on the display 130 while causing the external device 200 to display the second area on the surrounding area 210 of the display 130 for display extension.

In an embodiment, the display device 100 may include an operation of transmitting a display request for the second area to the external device 200.

In an embodiment, the display device 100 may cause the first area and the second area to display the same image simultaneously by adjusting the display for the first area according to a state of the external device 200 displaying the second area on the surrounding area 210 of the display 130.

In an embodiment, the display device 100 may include an operation of synchronizing an image of the content displayed on the first area with an image of the content displayed on the second area.

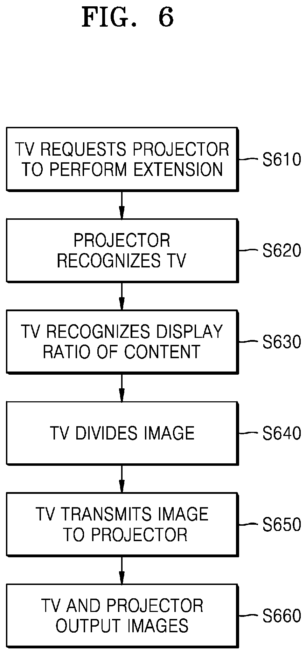

FIG. 6 is a flowchart of a method of operating a display device and an external device, according to an embodiment of the present disclosure.

In the embodiment of FIG. 6, the display device 100 may be a TV, and the external device 200 may be a projector.

The TV may transmit a display extension request to the projector (S610).

The projector may recognize the TV (S620).

In an embodiment, the TV, which is the display device 100, may display a certain image to allow the projector, which is the external device 200, to recognize the display 130 of the TV.

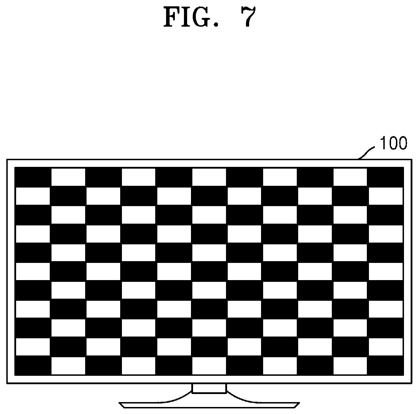

In an embodiment, the certain image may be an image such as a grid pattern illustrated in FIG. 7.

In an embodiment, the TV may display a certain image to allow the projector to recognize the position of the display 130 and the size of the display 130 based on the position where the grid pattern is displayed and the number of grid patterns displayed.

In an embodiment, the TV may receive, from the projector, a message that recognition of the TV is complete.

In the embodiment of FIG. 6, the projector may recognize the position of the TV and the size of the display included in the TV, by recognizing a grid pattern as illustrated in FIG. 7. The method by which the projector recognizes the position of the TV and the size of the display included in the TV is not limited thereto, and various methods may be used.

The TV may recognize the display ratio of an image (S630). The image may refer to an image of the content.

The TV may obtain information about the display ratio of an image to be displayed. Operation S630 may be an example of operation S510, and thus, redundant descriptions of S510 of FIG. 5 will be omitted.

The TV may divide the image (S640).

The TV may divide the image to be displayed into a first area to be displayed on the display of the TV, and a second area to be displayed on a surrounding area of the display of the TV for display extension by using the projector. Operation S640 may be an example of operation S520, and thus, redundant descriptions of S520 of FIG. 5 will be omitted.

The TV may transmit the image to the projector (S650).

The TV may transmit, to the projector, the second area, which corresponds to the area to be displayed on the surrounding area of the display of the TV for display extension by using the projector, among the first area and the second area obtained by the dividing in operation S640.

The TV may output an image to the display while causing the projector to output an image (S660).

The TV may cause images of the two areas that are obtained by the dividing in operation S640, to be simultaneously displayed by synchronizing the projector with the TV. The images of the two areas obtained by the dividing in operation S640 may be seamlessly concatenated and displayed on the display of the TV and the surrounding area 210 of the display of the TV, respectively.

Through this process, the TV may display an image of the content having a display ratio different from that of the TV, without reducing the size of the image, at the unique display ratio of the image.

The method of operating a display device according to the embodiment of FIG. 6 may increase the user's sense of immersion by allowing the display device 100 to display an image having a size larger than the size of the display 130 equipped in the display device 100.

In addition, the method of operating a display device according to the embodiment of FIG. 6 enables the display device 100 having a display ratio different from that of the content to display the content with the unique display ratio of the content without modifying the content, such that the intention of the creator of the content is better conveyed to the user.

FIG. 7 is a diagram illustrating an example of a display device displaying a certain image to allow an external device to detect the position and size of a display, according to an embodiment of the present disclosure.

As described above with reference to FIG. 6, the display device 100 may display a certain image on the display 130 to allow the external device 200 to detect the position and size of the display 130.

The grid pattern illustrated in FIG. 7 may be an example of the certain image. However, the certain image is not limited thereto, and images with various patterns such as circular patterns or comb patterns may correspond to the certain image.

The external device 200 may detect the position and size of the display 130 by detecting the certain image through a sensor, a camera, or the like.

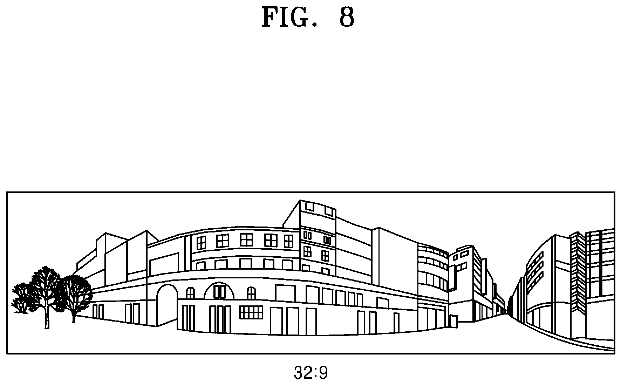

FIGS. 8 to 10 illustrate examples of operation S520 of FIG. 5 in which the display device 100 generates, based on the display ratio of content and the display ratio of the display device 100, a first area of an image of the content to be displayed on the display 130, and a second area of the image of the content to be displayed, by the external device 200, on a surrounding area of the display 130.

FIG. 8 is a diagram illustrating an example of content having a display ratio different from that of a display device, according to an embodiment of the present disclosure.

FIG. 8 may be a diagram illustrating content filmed with a display ratio of 32:9.

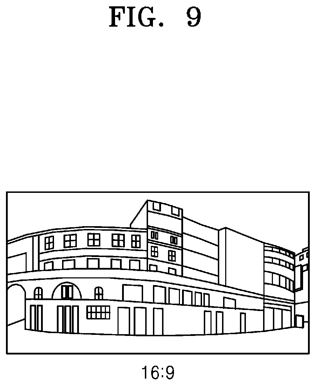

FIG. 9 is a diagram illustrating an example of a display device displaying a first area of content according to the display ratio of the display device, according to an embodiment of the present disclosure.

In the embodiment of FIG. 9, the display ratio of the display 130 included in the display device 100 may be 16:9.

When the display device 100 having a display ratio of 16:9 displays the content of FIG. 8, i.e., the content having a display ratio of 32:9, only a portion of the content may be displayed, as illustrated in FIG. 9.

In an embodiment, the display device 100 may display only a portion of the content based on the center of the content, and areas of about 50 % of the left and right sides of the content may be lost. Here, the partial area of the content displayed on the display device 100 may be a first area.

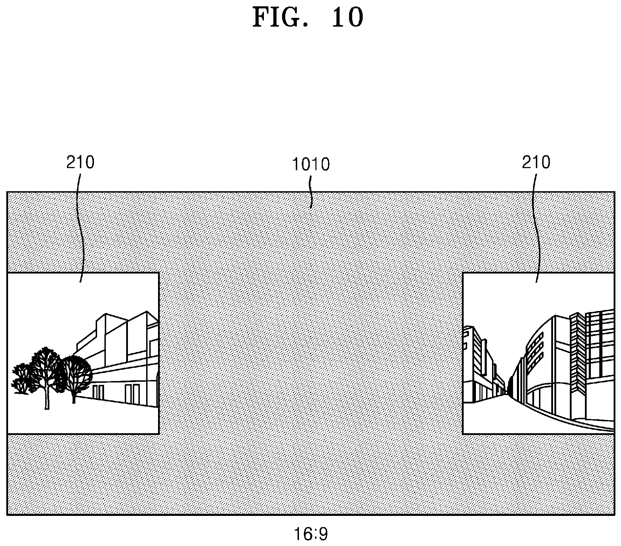

FIG. 10 is a diagram illustrating an example of a second area generated by a display device, according to an embodiment of the present disclosure.

FIG. 10 may be a diagram illustrating partial areas of the left and right sides of the content that are lost in the embodiment of FIG. 9.

The display device 100 may display the content on the display 130 at the display ratio of the display device 100, that is, a display ratio of 16:9, based on the center of the content, and generate the other lost portions of the content as illustrated in FIG. 10 and transmit them to the external device 200. When the display device 100 displays the content at the display ratio of the display device 100, the lost portion may be the second area. The second area may be displayed, by the external device 200, on the surrounding area 210 of the display device 100.

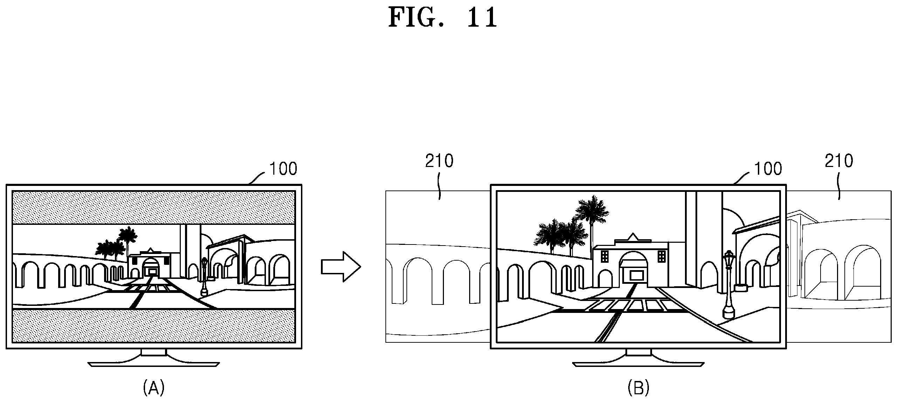

FIG. 11 is a diagram illustrating an example of a display device extending a display by using an external device, according to an embodiment of the present disclosure.

In the embodiment of FIG. 11, the display device 100 may include the display 130 having a display ratio of 16:9. On the contrary, the content may have been filmed to be viewed at a ratio of 32:9.

In an embodiment, the display device 100 including the display 130 having a display ratio of 16:9 may display content filmed to be viewed at a ratio of 32:9 as in (A) without executing a display extension mode.

In an embodiment, the display device 100 including the display 130 having a display ratio of 16:9 may display the content filmed to be viewed at a ratio of 32:9 as in (B) when executing the display extension mode.

The display device 100 may display a portion of the content in accordance with the display ratio of the display device 100 and transmit the other portion of the content to the external device 200 to cause the external device 200 to display the other portion on the surrounding area 210 of the display device 100.

The display device 100 may cause the external device 200 to seamlessly display a partial image of the content on the surrounding area 210 of the display device for display extension.

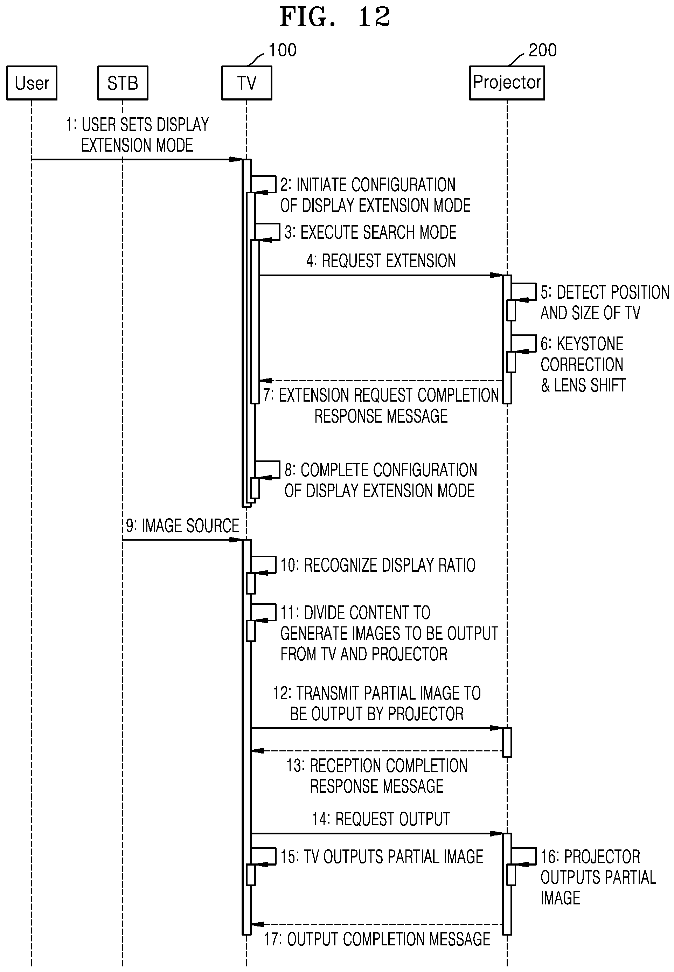

FIG. 12 is a flowchart of a method of operating a display device and an external device, according to an embodiment of the present disclosure.

In the embodiment of FIG. 12, the display device 100 may be a TV, and the external device 200 may be a projector.

The display device 100 may receive, from the user, an input for setting a display extension mode (1).

In an embodiment, the input for setting the display extension mode may be received in a menu or a configuration screen via a touch screen of the display device 100.

In an embodiment, the input for setting the display extension mode may be received in a menu or a configuration screen via a remote controller of the display device 100.

In an embodiment, once the display device 100 receives, from the user, an input for setting the display extension mode, the display device 100 may maintain the existing settings for the display extension mode until it receives an input for changing the settings from the user.

In an embodiment, operation 1 of receiving, from the user, an input for setting the display extension mode may be omitted.

In an embodiment, when the display device 100 receives, from the user, an input for setting the display extension mode, the display device 100 may initiate configuration of the display extension mode (2). Configuration of the display extension mode may be performed as in operations 3 to 8 to be described below.

The display device 100 may execute a search mode (3).

In an embodiment, in the search mode, the display device 100 may detect whether the external device 200 exists within a preset distance around the display device 100, whether the external device 200 is available, and whether there is a network connection between the external device 200 and the display device 100.

In an embodiment, when a plurality of external devices 200 exist within a preset distance around the display device 100, the display device 100 may select one of the external devices 200 based on the availability of the external devices 200, the distances between the external devices 200 and the display device 100, the positions of the external devices 200, the usage history of the external devices 200, or the like. The display device 100 may display a partial area of content on the surrounding area 210 of the display device 100 by using the selected external device 200.

In an embodiment, when there is no available external device 200, the display device 100 may display a notification message that there is no available external device 200.

In an embodiment, when there is no network connection between the external device 200 and the display device 100, the display device 100 may establish a network connection.

The display device 100 may transmit a display extension request to the external device 200 (4).

The external device 200 that has received the display extension request from the display device 100 may detect the position and size of the display 130 included in the display device 100 (5).

In an embodiment, the external device 200 may obtain information about the position and size of the display 130 by detecting a certain image displayed on the display device 100.

In an embodiment, the external device 200 may obtain information about the image quality or resolution of the display 130 by detecting the certain image displayed on the display device 100.

The obtained information may be used to determine a position on which the external device 200 is to display a second area of the content.

The external device 200 may perform keystone correction and lens shift by using the information about the position and size of the display 130 (6).

In an embodiment, keystone correction may refer to an operation of determining and correcting the shape or position of display of an image to be displayed by the external device 200.

In an embodiment, lens shift may refer to an operation in which the external device 200 adjusts the focal point of a lens, etc. to adjust the image quality of the image to be displayed.

In an embodiment, the external device 200 may perform keystone correction and lens shift based on information obtained by detecting the certain image displayed on the display device 100.

The external device 200 may transmit, to the display device 100, a response message that processing for the display extension request has been completed (7).

In an embodiment, processing for the display extension request may refer to operations 5 and 6. After detection of the position and size of the display 130 included in the display device 100, keystone correction, and lens shift are completed, the external device 200 may transmit, to the display device 100, a response message that processing for the display extension request has been completed.

In an embodiment, the display device 100 may omit the operation of receiving, from the external device 200, the response message that processing for the display extension request has been completed. In this case, when a preset period of time elapses after the display extension request is transmitted, the display device 100 may assume that processing for the display extension request has been completed.

The display device 100 that has received the response message of operation 7 from the external device 200 may complete the configuration of the display extension mode (8).

In an embodiment, the display device 100 may control the external device 200 to perform operations 5 and 6.

In an embodiment, the display device 100 may obtain an image source from a set-top box (STB) (9).

In an embodiment, the display device 100 may obtain a content source of from an over-the-top (OTT) server, a broadcasting station, or other external devices.

In an embodiment, the display device 100 may obtain content stored in a storage medium.

The display device 100 may recognize the display ratio of the obtained content (10).

The recognizing of the display ratio of the content by the display device 100 may be the same as operation S510 of FIG. 5 or operation S630 of FIG. 6. Thus, redundant descriptions provided above will be omitted.

The display device 100 may divide the obtained content into a portion to be output by the display device 100 and a portion to be output by the external device 200, and generate respective images (11).

In an embodiment, the display device 100 may divide the obtained content into a first area to be output by the display device 100, and a second area to be output by the external device 200, based on the display ratio of the display device 100 and the display ratio of the content.

The dividing of the content into the first area and the second area by the display device 100 may be the same as operation S520 of FIG. 5 or operation S640 of FIG. 6. Thus, redundant descriptions provided above will be omitted.

The display device 100 may transmit, to the external device 200, the second area, which is an area of the content to be displayed by the external device 200 (12).

The display device 100 may receive, from the external device 200, a reception completion response message that reception of the second area has been completed (13).

In an embodiment, the display device 100 may omit the operation of receiving the reception completion response message from the external device 200. In this case, when the display device 100 completes transmission of the second area, the display device 100 may determine that the external device 200 has completed reception of the second area.

The display device 100 may request the external device 200 to display the second area of the content (14).

The display device 100 may display the first area of the content (15).

The external device 200 may display the second area of the content (16).

In an embodiment, the display device 100 may control the external device 200 to display the second area of the content.

Operation 15 in which the display device 100 displays the first area of the content, and operation 16 in which the external device 200 displays the second area of the content, may be performed simultaneously.

In an embodiment, the display device 100 may synchronize content reproduction by the display device 100 with content reproduction by the external device 200, to simultaneously display the same content with the external device 200.

The external device 200 may display the second area of the content received from the display device 100. In an embodiment, the external device 200 may display the second area of the content by optically magnifying the image and projecting the magnified image onto a surrounding area of the display device 100.

The display device 100 may receive, from the external device 200, a display completion message for the second area (17).

After completing display of the second area of the content received from the display device 100, the external device 200 may transmit the display completion message to the display device 100.

In an embodiment, the display device 100 may omit operation 17 of receiving the display completion response message from the external device 200. In this case, when the display device 100 completes display of the first area, the display device 100 may determine that display of the second area by the external device 200 has been also completed.

In an embodiment, when the display device 100 receives the display completion response message from the external device 200, the display device 100 may perform operations 11 to 17 for the next image of the content. The display device 100 may repeatedly perform operations 11 to 17 until all images of the content are displayed.

In an embodiment, the display device 100 may perform operations 1 to 8 only once and then omit them when repeating the operations. In an embodiment, when repeating the operations, the display device 100 may apply the same details used in the previous execution.

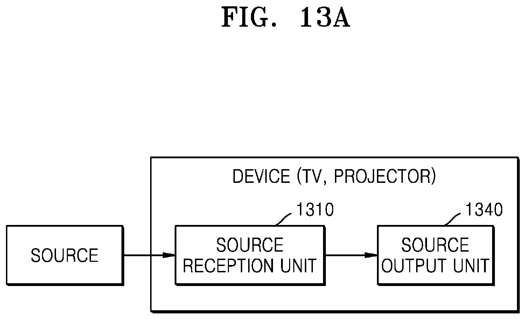

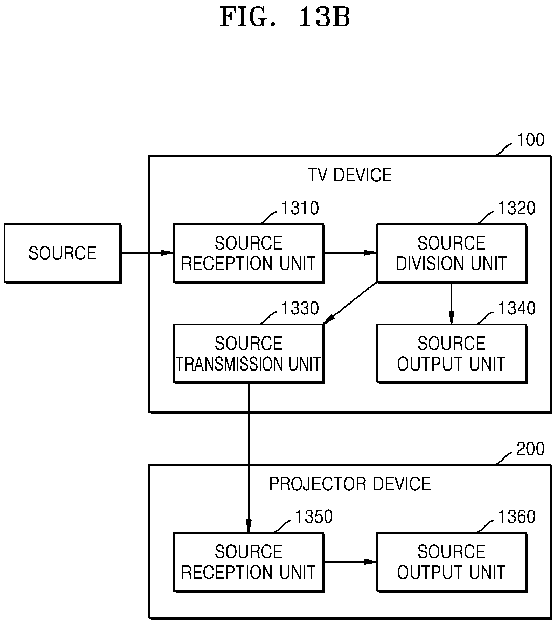

FIG. 13A is a block diagram illustrating a configuration of a display device according to the related art, and FIG. 13B is a block diagram illustrating a configuration of a display device and an external device, according to an embodiment of the present disclosure.

A related-art display device, i.e., the display device of FIG. 13A, receives a content source through a source reception unit 1310 and outputs the received source through a source output unit 1340. The related-art display device outputs the received content source as is without performing any process on it.

On the contrary, the display device 100 according to an embodiment of the present disclosure, i.e., the display device 100 of FIG. 13B, may receive a content source through the source reception unit 1310 and divide the received content source into a first area to be displayed by the display device 100, and a second area to be displayed, by the external device 200, through a source division unit 1320. In an embodiment, the method by which the source division unit 1320 divides a source may be the same as operation S520 of FIG. 5.

The display device 100 according to an embodiment of the present disclosure may display, through the source output unit 1340, the first area obtained by the dividing by the source division unit 1320.

The display device 100 according to an embodiment of the present disclosure may transmit the second area obtained by dividing by the source division unit 1320, to the external device 200 through a source transmission unit 1330.

The external device 200 may receive the second area of the content generated by the display device 100, from the display device 100 through a source reception unit 1350.

The external device 200 may display the received second area of the content, through a source output unit 1360. The source output unit 1360 may display the received second area of the content on the surrounding area 210 of the display device 100.

The display device 100 according to an embodiment may be a smart TV.

The external device 200 according to an embodiment may be a smart projector.

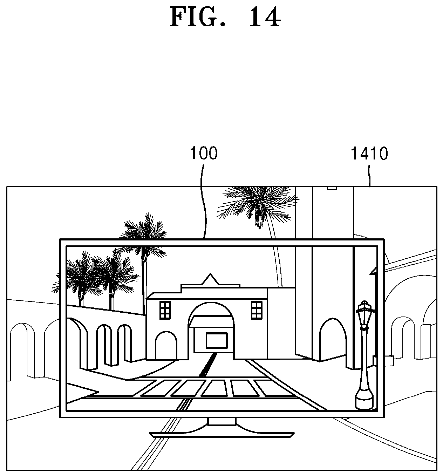

FIG. 14 is a diagram illustrating an example of a display device extending a display by using an external device, according to an embodiment of the present disclosure.

In the embodiment of FIG. 14, the display device 100 may include the display 130 having a display ratio of 16:9.

On the contrary, the content may have been filmed to be viewed at a ratio of 1.43:1. The content filmed with a ratio of 1.43:1 may be high-resolution content filmed by using film for IMAX, a theatrical film distribution platform.

When displaying content filmed for IMAX on a general display device 100 having a display ratio of 16:9 and a general resolution, the display device 100 may display a screen with portions of the content image cropped at the top, bottom, left, and right because the display ratios and resolutions do not match.

In an embodiment, the display device 100 may execute the display extension mode to display IMAX content filmed with a ratio of 1.43:1, as illustrated in FIG. 14.

The display device 100 may display, on the display 130, a screen in which portions of the content are cropped at the top, bottom, left, and right in accordance with the display ratio and resolution of the display device 100, and transmit, to the external device 200, the other portions of the content, i.e., a second area of the content image corresponding to the cropped top, bottom, left, and right portions, to cause the external device 200 to display the second area on a surrounding area 1410 of the display device 100.

The display device 100 may cause the external device 200 to seamlessly display an image of the content on the surrounding area 1410 of the display device for display extension.

An image displayed on a surrounding area of the display device by the external device 200 for display extension may extend the display only to the left and right as in FIG. 11, may extend the display upward, downward, leftward, and rightward as in FIG. 14, or may extend the display only upward and downward.

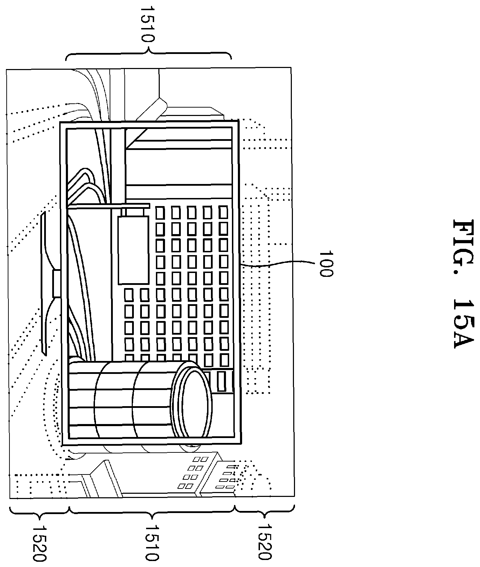

FIG. 15A is a diagram illustrating an example of a display device extending a display leftward and rightward according to the display ratio of content by using an external device, and further extending the display upward and downward according to a user input, according to an embodiment of the present disclosure.

For example, when content filmed with a display ratio of 32:9 is displayed on the display device 100 having a display ratio of 16:9, an image with about 50 % of the left and right sides of the content cropped may be displayed on the display device 100.

In an embodiment, the display device 100 may divide an image of the content into a first area and a second area. The first area may be an area to be displayed on the display device 100, and the second area may be an area to be displayed, by the external device 200, on a surrounding area 1510 of the display device 100. The second area 1510 may correspond to 50 % of the left and right sides of the content that cannot be displayed on the display device 100 when displaying the content filmed with a display ratio of 32:9 on the display device 100 having a display ratio of 16:9.

In this case, the user is able to view the content at a display ratio of 32:9, but may also want to view the image on a display extended upward and downward. For example, the user may want to view, at a display ratio of 32:15, the content filmed with a display ratio of 32:9. In this case, the display device 100 needs to extend the display 130 upward and downward, in addition to leftward and rightward.

In this case, because the original display ratio of the content is 32:9, unlike leftward and rightward extension, a portion 1520 for additional upward and downward extension may require artificially increasing the upper and lower boundary portions of the original content. In an embodiment, because the portion 1520 for additional upward and downward extension is intended to artificially extend the content, an upper or lower portion of the displayed content may be displayed as being stretched upward and downward, respectively. In an embodiment, the portion 1520 for additional upward and downward extension may be displayed with a lower resolution, as being blurred, or with an effect such as glare.

In an embodiment, the display device 100 may increase immersion in content and enhance user satisfaction by providing an option to extend the display leftward and rightward according to the display ratio of the content by using the external device 200, and further extend the display upward and downward according to a user input.

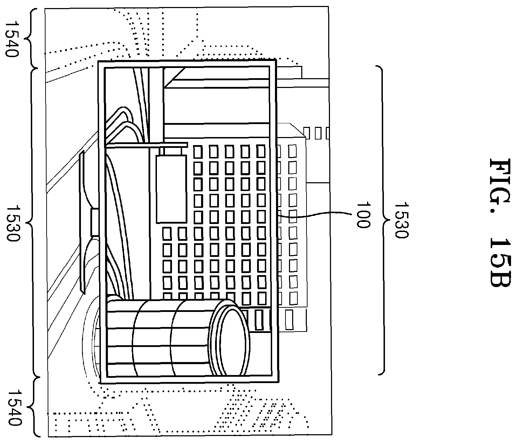

FIG. 15B is a diagram illustrating an example of a display device extending a display upward and downward according to the display ratio of content by using an external device, and further extending the display leftward and rightward according to a user input, according to an embodiment of the present disclosure.

For example, when content filmed with a display ratio of 16:18 is displayed on the display device 100 having a display ratio of 16:9, an image with about 50 % of the upper and lower sides of the content cropped may be displayed on the display device 100.

In an embodiment, the display device 100 may divide an image of the content into a first area and a second area. The first area may be an area to be displayed on the display device 100, and the second area may be an area to be displayed, by the external device 200, on a surrounding area 1530 of the display device 100. The second area 1530 may correspond to 50 % of the upper and lower sides of the content that cannot be displayed on the display device 100 when displaying the content filmed with a display ratio of 16:18 on the display device 100 having a display ratio of 16:9.

In this case, the user is able to view the content at a display ratio of 16:18, but may also want to view the image on a display extended leftward and rightward. For example, the user may want to view, at a display ratio of 32:18, the content filmed with a display ratio of 16:18, on the display device 100 having a display ratio of 16:9. In this case, the display device 100 needs to extend the display 130 leftward and rightward, and additionally extend the display 130 upward and downward.

In this case, because the original display ratio of the content is 16:18, unlike upward and downward extension, a portion 1540 for additional leftward and rightward extension may require artificially increasing the left and right boundary portions of the original content. In an embodiment, because the portion 1540 for additional leftward and rightward extension is intended to artificially extend the content, a left or right boundary portion of the displayed content may be displayed as being stretched leftward and rightward, respectively. That is, the portion 1540 for additional leftward and rightward extension may be displayed with a lower resolution, as being blurred, or with an effect such as glare.

In an embodiment, the display device 100 may increase immersion in content and enhance user satisfaction by providing an option to extend the display leftward and rightward according to the display ratio of the content by using an external device, and further extend the display upward and downward according to a user input.

FIG. 16 is a diagram illustrating an example of a display device displaying ambient light on a certain surrounding area of a display by using an external device, according to an embodiment of the present disclosure.

In an embodiment, based on the recognized display ratio of the content and the display ratio of the display device 100 being equal to each other, the display device 100 may cause the external device 200 to display ambient light on a certain surrounding area 1610 of the display device 100. In this case, the display device 100 may omit an operation of dividing the content, that is, an operation of generating a first area to be displayed on the display device 100, and a second area to be displayed, by the external device 200, on a surrounding area of the display device 100.

In an embodiment, the display device 100 may generate ambient light and transmit the ambient light to the external device 200. In an embodiment, the display device 100 may transmit, to the external device 200, information about the shape and size of a certain area on which ambient light is to be displayed.

The display device 100 may control the external device 200 to display ambient light on the certain surrounding area 1610 of the display device 100.

In an embodiment, ambient light may refer to light that is similar in color, brightness, or saturation to portions adjacent to the content displayed on the display device 100.

In an embodiment, ambient light may refer to light that artificially extends content, as in the embodiments of FIGS. 15A and 15B. In this case, a shape that resembles the upper, lower, left, and right ends of the displayed content being pulled and stretched upward, downward, leftward, and rightward, respectively, may be displayed on the extended area 1610.

The certain area 1610 may be manually determined based on a user input, or may be automatically determined based on usage history, default settings, etc. In an embodiment, the display device 100 may receive a user input regarding the certain area 1610 in the form of a display ratio.

Displaying ambient light on the certain surrounding area 1610 of the display device 100 may increase the user's sense of immersion in viewing the content. Displaying ambient light on the certain surrounding area 1610 of the display device 100 may give the user the feeling that the content is being displayed at a higher resolution than the actual resolution.

A method of operating a display device according to an embodiment may be implemented as a computer-readable recording medium including computer-executable instructions such as a computer-executable program module. The computer-readable medium may be any available medium which is accessible by a computer, and may include a volatile or non-volatile medium and a removable or non-removable medium. The computer-readable medium may include program instructions, data files, data structures, or the like separately or in combinations. The program instructions to be recorded on the medium may be specially designed and configured for the present disclosure or may be well-known to and be usable by those skill in the art of computer software. Examples of the computer-readable recording medium include magnetic media such as hard disks, floppy disks, or magnetic tapes, optical media such as a compact disc ROM (CD-ROM) or a digital video disc (DVD), magneto-optical media such as a floptical disk, and hardware devices such as ROM, RAM, or flash memory, which are specially configured to store and execute program commands. Examples of program commands may include not only machine code, such as code made by a compiler, but also high-level language code that is executable by a computer by using an interpreter or the like.

The above description is provided only for illustrative purposes, and those of skill in the art will understand that the disclosure may be easily modified into other detailed configurations without modifying technical aspects and essential features of the disclosure. Therefore, it should be understood that the above-described embodiments are exemplary in all respects and are not limited. For example, each element described in a single type may be executed in a distributed manner, and elements described distributed may also be executed in an integrated form.

According to an embodiment, a display device 100 includes a display 130, a memory 120 storing one or more instructions, and at least one processor 110 configured to execute the one or more instructions stored in the memory to recognize a display ratio of content, generate, based on the recognized display ratio of the content and a display ratio of the display 130, a first area of an image of the content to be displayed on the display 130, and a second area of the image of the content to be displayed, by an external device 200, on a surrounding area 210, 1410, 1510, or 1530 of the display 130, and display the first area on the display 130 while causing the external device 200 to display the second area on the surrounding area 210, 1410, 1510, or 1530 of the display 130 to extend the display 130, by transmitting the second area to the external device 200.

According to an embodiment, the at least one processor 110 may be further configured to execute the one or more instructions to transmit a display extension request to the external device 200, and receive, from the external device 200, a response to the display extension request.

According to an embodiment, the at least one processor 110 may be further configured to execute the one or more instructions to transmit the display extension request to the external device 200 to allow the external device 200 to detect a position and a size of the display 130.

According to an embodiment, the at least one processor 110 may be further configured to execute the one or more instructions to display a certain image on the display 130 to allow the external device 200 to detect the position and the size of the display 130.

According to an embodiment, the at least one processor 110 may be further configured to execute the one or more instructions to, in response to receiving, from a user, an input for setting a display extension mode, transmit a display extension request to the external device 200.

According to an embodiment, the at least one processor 110 may be further configured to execute the one or more instructions to, based on the recognized display ratio of the content and the display ratio of the display 130 being different from each other, determine the first area to be displayed on the display 130 according to the display ratio of the display 130, and determine another area that is not included in the first area, as the second area to be displayed, by the external device 200, on the surrounding area 210, 1410, 1510, or 1530 of the display 130.

According to an embodiment, the at least one processor 110 may be further configured to execute the one or more instructions to transmit a display request for the second area to the external device 200, and adjust display of the first area according to a state of the external device 200 displaying the second area.

According to an embodiment, the at least one processor 110 may be further configured to execute the one or more instructions to synchronize and display an image of the content displayed in the first area, with an image of the content displayed in the second area.

According to an embodiment, the at least one processor 110 may be further configured to execute the one or more instructions to recognize the display ratio of the content by using at least one of pieces of metadata including a resolution or the display ratio of the content.

According to an embodiment, the at least one processor 110 may be further configured to execute the one or more instructions to, based on the recognized display ratio of the content and the display ratio of the display 130 being equal to each other, cause the external device 200 to display ambient light on a certain portion of the surrounding area 210, 1410, 1510, or 1530 of the display 130.

According to an embodiment, a method of operating a display device 100 includes recognizing a display ratio of content, generating, based on the recognized display ratio of the content and a display ratio of a display 130 included in the display device 100, a first area of an image of the content to be displayed on the display 130, and a second area of the image of the content to be displayed, by an external device 200, on a surrounding area 210, 1410, 1510, or 1530 of the display 130, and transmitting the second area to the external device 200 such that the display device 100 displays the first area on the display 130 and simultaneously, the external device 200 displays the second area on the surrounding area 210, 1410, 1510, or 1530 of the display 130 to extend the display 130.

According to an embodiment, the method of operating the display device 100 may further include transmitting a display extension request to the external device 200, and receiving, from the external device 200, a response to the display extension request.

According to an embodiment, the transmitting of the display extension request to the external device 200 and the receiving of the response to the display extension request from the external device 200 may include transmitting the display extension request to the external device 200 to allow the external device 200 to detect a position and a size of the display 130.

According to an embodiment, the method of operating the display device 100 may further include displaying a certain image on the display 130 to allow the external device 200 to detect the position and the size of the display 130.

According to an embodiment, the transmitting of the display extension request to the external device 200 and the receiving of the response to the display extension request from the external device 200 may include, in response to receiving, from a user, an input for setting a display extension mode, transmitting the display extension request to the external device 200.

According to an embodiment, the method of operating the display device 100 may further include, based on the recognized display ratio of the content and the display ratio of the display 130 being different from each other, determining the first area to be displayed on the display 130 according to the display ratio of the display 130, and determining another area that is not included in the first area, as the second area to be displayed, by the external device 200, on the surrounding area 210, 1410, 1510, or 1530 of the display 130.

According to an embodiment, the displaying of the first area on the display 130 while causing the external device 200 to display the second area on the surrounding area 210, 1410, 1510, or 1530 of the display 130 to extend the display 130, by transmitting the second area to the external device 200 may include synchronizing and displaying an image of the content displayed in the first area, with an image of the content displayed in the second area.

According to an embodiment, the recognizing of the display ratio of the content may include recognizing the display ratio of the content by using at least one of pieces of metadata including a resolution or the display ratio of the content.

According to an embodiment, the method of operating the display device 100 may further include, based on the recognized display ratio of the content and the display ratio of the display 130 being equal to each other, causing the external device 200 to display ambient light on a certain portion of the surrounding area 210, 1410, 1510, or 1530 of the display 130.

According to an embodiment, a computer-readable recording medium may have recorded thereon a program for implementing a method of operating a display device 100, the method including recognizing a display ratio of content, generating, based on the recognized display ratio of the content and a display ratio of a display 130 included in the display device 100, a first area of an image of the content to be displayed on the display 130, and a second area of the image of the content to be displayed, by an external device 200, on a surrounding area 210, 1410, 1510, or 1530 of the display 130, and transmitting the second area to the external device 200 such that the display device 100 displays the first area on the display 130 and simultaneously, the external device 200 displays the second area on the surrounding area 210, 1410, 1510, or 1530 of the display 130 to extend the display 130.

According to an embodiment, methods according to various embodiments disclosed herein may be included in a computer program product and then provided. The computer program product may be traded as commodities between sellers and buyers. The computer program product may be distributed in the form of a machine-readable storage medium (e.g., a CD-ROM), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

## Claims

1. A display device comprising:
a display (130);
a memory (120) storing one or more instructions; and
at least one processor (110) configured to execute the one or more instructions stored in the memory to recognize a display ratio of content, generate, based on the recognized display ratio of the content and a display ratio of the display (130), a first area of an image of the content to be displayed on the display (130), and a second area of the image of the content to be displayed, by an external device (200), on a surrounding area (210, 1410, 1510, and 1530) of the display (130), and display the first area on the display (130) while causing the external device (200) to display the second area on the surrounding area (210, 1410, 1510, and 1530) of the display (130) to extend the display (130), by transmitting the second area to the external device (200).

2. The display device of claim 1, wherein the at least one processor (110) is further configured to execute the one or more instructions to transmit a display extension request to the external device (200), and receive, from the external device (200), a response to the display extension request.

3. The display device of claim 2, wherein the at least one processor (110) is further configured to execute the one or more instructions to transmit the display extension request to the external device (200) to allow the external device (200) to detect a position and a size of the display (130).

4. The display device of any one of claims 1 to 3, wherein the at least one processor (110) is further configured to execute the one or more instructions to display a certain image on the display (130) to allow the external device (200) to detect the position and the size of the display (130).

5. The display device of any one of claims 2 to 3, wherein the at least one processor (110) is further configured to execute the one or more instructions to, in response to receiving, from a user, an input for setting a display extension mode, transmit a display extension request to the external device (200).

6. The display device of any one of claims 1 to 5, wherein the at least one processor (110) is further configured to execute the one or more instructions to, based on the recognized display ratio of the content and the display ratio of the display (130) being different from each other, determine the first area to be displayed on the display (130) according to the display ratio of the display (130), and determine another area that is not included in the first area, as the second area to be displayed, by the external device (200), on the surrounding area (210, 1410, 1510, and 1530) of the display (130).

7. The display device of any one of claims 1 to 6, wherein the at least one processor (110) is further configured to execute the one or more instructions to transmit a display request for the second area to the external device (200), and adjust display of the first area according to a state of the external device (200) displaying the second area.

8. The display device of any one of claims 1 to 7, wherein the at least one processor (110) is further configured to execute the one or more instructions to synchronize and display an image of the content displayed in the first area, with an image of the content displayed in the second area.

9. The display device of any one of claims 1 to 8, wherein the at least one processor (110) is further configured to execute the one or more instructions to recognize the display ratio of the content by using at least one of pieces of metadata comprising a resolution or the display ratio of the content.

10. The display device of claim 1, wherein the at least one processor (110) is further configured to execute the one or more instructions to, based on the recognized display ratio of the content and the display ratio of the display (130) being equal to each other, cause the external device (200) to display ambient light on a certain portion of the surrounding area (210, 1410, 1510, and 1530) of the display (130).

11. A method of operating a display device (100), the method comprising:
recognizing a display ratio of content;
generating, based on the recognized display ratio of the content and a display ratio of a display (130) included in the display device (100), a first area of an image of the content to be displayed on the display (130), and a second area of the image of the content to be displayed, by an external device (200), on a surrounding area (210, 1410, 1510, and 1530) of the display (130); and
transmitting the second area to the external device (200) such that the display device (100) displays the first area on the display (130) and simultaneously, the external device (200) displays the second area on the surrounding area (210, 1410, 1510, and 1530) of the display (130) to extend the display (130).

12. The method of claim 11, further comprising transmitting a display extension request to the external device (200), and receiving, from the external device (200), a response to the display extension request.

13. The method of claim 12, wherein the transmitting of the display extension request to the external device (200) and the receiving of the response to the display extension request from the external device (200) comprise transmitting the display extension request to the external device (200) to allow the external device (200) to detect a position and a size of the display (130).

14. The method of any one of claims 11 to 13, further comprising displaying a certain image on the display (130) to allow the external device (200) to detect the position and the size of the display (130).

15. A computer-readable recording medium having recorded thereon a program for causing a computer to perform the method of any one of claims 11 to 14.
